# EUROPEAN PATENT SPECIFICATION

(11) **EP 3 798 526 B1**
(45) Date of publication and mention of the grant of the patent: **29.10.2025**
(21) Application number: 20208420.8
(22) Date of filing: 07.05.2019
(51) Int. Cl.: B29B 9/16, F24F 3/14, F24F 8/108, F24F 11/48, F24F 11/89, F24F 11/61, F24F 11/30, F24F 110/22

(54) **SYSTEM FOR CONTROLLING A DEHUMIDIFIER WHEEL**
SYSTEM ZUR STEUERUNG EINES ENTFEUCHTERRADES
SYSTÈME POUR COMMANDER UNE ROUE DE DÉSHUMIDIFICATION

(30) Priority: 14.05.2018 IT 201800005333
(43) Date of publication of application: 31.03.2021
(62) Divisional of application: 19173140.5
(73) Proprietor: Piovan S.P.A., 30036 Santa Maria di Sala (VE) (IT)
(72) Inventor: BELLIO, Enrico, 31050 Ponzano V.to (TV) (IT); BEVILACQUA, Marco, 35010 San Giorgio delle Pertiche (PD) (IT)
(74) Representative: Luppi Intellectual Property S.r.l.

(56) References cited:
- EP-A1- 1 319 905
- JP-A- 2001 259 350
- JP-A- 2002 273 149
- JP-A- 2003 254 559
- JP-A- 2009 041 862
- US-A1- 2004 194 490

## Description

The invention relates to a system for controlling a dehumidifier wheel.

In the field of air dehumidification intended to be used as a technological adjuvant for the food industry and/or as technical air for the pharmaceutical industry and/or for conditioning environments with a controlled atmosphere, using a so-called "dehumidifier wheel" for the process of dehumidifying the air is known.

The dehumidifier wheel is made of a drying material having great humidity absorbing capacity. Silica gel and zeolite are examples of this drying material.

The dehumidifier wheel has a honeycomb geometric structure. The honeycomb structure enables channels to be made through which the air traverses the dehumidifier wheel 2, and a contact surface of the drying material with the air to be increased.

In use, the dehumidifier wheel is rotated, continuously, by drive means, so that, at a given moment, a first sector of the dehumidifier wheel is traversed by a flow of "process air" and a second sector of the dehumidifier wheel, adjacent to the first sector, is traversed by a flow of "regenerating air". In particular, the sector that, at a given moment, is traversed by the flow of process air, is known as the absorption sector, whereas the sector that, at a given moment, is traversed by the flow of regenerating air is known as the regeneration sector. As disclosed below, the humidity of the flow of process air traversing the drying material is absorbed by the drying material whereas in the regeneration sector the humidity previously absorbed by the drying material is evaporated from the drying material by the flow of regenerating air.

In particular, upstream of the absorption sector a filter is present for filtering the process air entering the absorption sector and, interposed between the filter and the absorption sector, a first cooling battery is present, known as a condensing battery, having the function of saturating the process air entering the absorption sector, this in order to increase the humidity absorption capacity by the drying material, in particular when the latter is silica gel. Downstream of the absorption sector, there is a second cooling battery having the function of cooling to a desired temperature the flow of dried process air 4 exiting the absorption sector. The presence of this second cooling battery is required in particular when the dehumidifier wheel is intended to be used in the food industry, where it is opportune for the process air to have a controlled temperature to prevent undesired organoleptic modifications of the food products that are to be conditioned thermally. Also, downstream of the second cooling battery there is another filter for filtering the dried and cooled process air, before it reaches a user, for example the aforesaid food product to be conditioned thermally.

Also, upstream of the aforesaid regeneration sector, a filter is present for filtering the regenerating air entering the regeneration sector and, interposed between the filter and the regeneration sector, there is a heater arranged for heating the regenerating air before it traverses the regeneration sector.

In use, the humid process air is taken by a fan from the external environment, filtered, saturated by the first cooling battery, passed through the absorption sector, where it contacts the drying material releasing the humidity, cooled by the second cooling battery, and lastly filtered again before being used as technological adjuvant for the food industry and/or as technical air for the pharmaceutical industry and/or for conditioning environments with a controlled atmosphere. Before being used as a technological adjuvant for the food industry and/or as technical air for the pharmaceutical industry and/or for conditioning environments with a controlled atmosphere, the process air is thus filtered, dried, cooled and again filtered.

Also, in use, the regenerating air is taken by a fan from the external environment, filtered, heated, passed through the regeneration sector and discharged into the external environment. This enables the humidity present in the drying material of the regeneration sector to evaporate rapidly to make the drying material available again, following rotation, continuously, of the dehumidifier wheel, to absorb humidity in the adjacent absorption sector. The humid regenerating air exiting the regeneration sector is then discharged into the external environment.

### JP 2009 041862 A discloses a dehumidifier wheel control system as in the preamble of claim 1.

A problem that affects the dehumidifier wheels currently used is the possible proliferation of organic substances such as moulds, bacteria, etc, in the dehumidifier wheel with consequent contamination with such organic substances of the user by the process air. For example, the proliferation of the organic substances can occur during a more or less prolonged shutdown of the dehumidifier wheel, such organic substances being then dragged into contact with the user following a restart of the dehumidifier wheel.

An object of the present invention is to improve the systems and methods for controlling dehumidifier wheels.

A further object is to provide systems and methods for controlling a dehumidifier wheel that reduce the risk of contaminating the user with organic substances following the restart of the dehumidifier wheel after a more or less prolonged shutdown.

Such objects and still others are obtained by the systems for controlling a dehumidifier wheel according to one or more of the claims below.

The invention can be better understood and implemented with reference to the attached drawings that illustrate some embodiments thereof by way of non-limiting example, in which:
Figure 1 is a schematic view of a first embodiment of a system for controlling a dehumidifier wheel according to the invention; and
Figure 2 is a schematic view of a second embodiment of a system for controlling a dehumidifier wheel according to the invention.

In the following description, the expression "process air" will mean the air taken from the external environment intended to release the humidity contained therein to a dehumidifier wheel and to come subsequently into contact with a user, whereas the expression "regenerating air" will mean the air taken from the external environment intended to regenerate the dehumidifier wheel, i.e. intended to remove the humidity present in the dehumidifier wheel.

Also, in the following description, the term "user" will mean a product or environment intended to make use of the process air, for example a food product to be thermally conditioned, an environment with a controlled atmosphere etc.

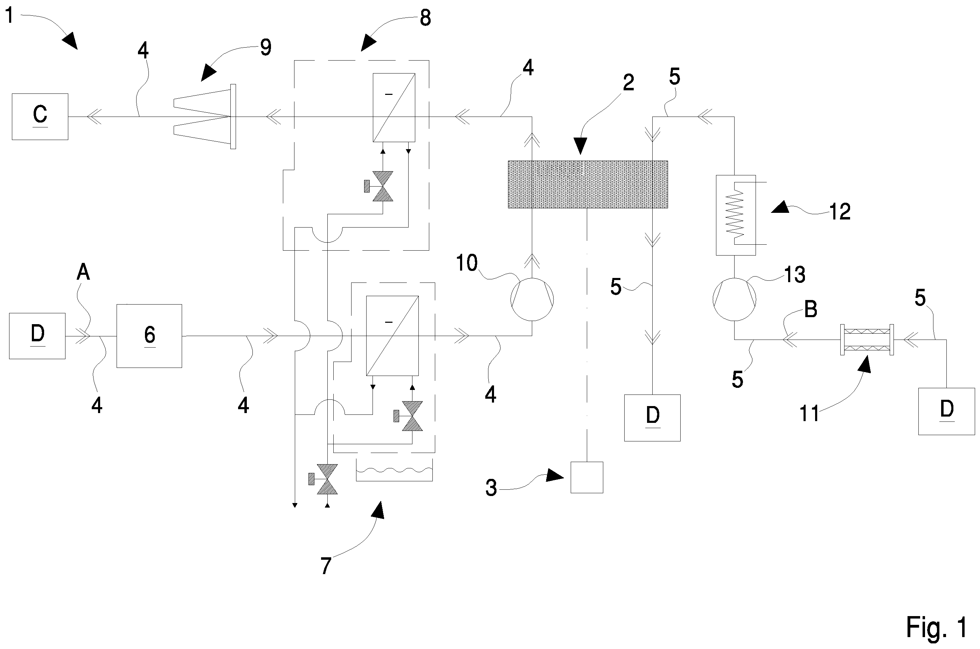

With reference to Figure 1, a control system 1 of a dehumidifier wheel 2 is shown.

The control system 1 comprises a control and management unit, which is not shown, configured for implementing the control methods for controlling the dehumidifier wheel 2 which are disclosed below.

The dehumidifier wheel 2 is made of a drying material having great humidity absorbing capacity. Silica gel and zeolite are examples of this drying material. The dehumidifier wheel 2 has a honeycomb structure, which is not shown. This honeycomb structure enables channels to be made that are not shown through which the air traverses the dehumidifier wheel 2, and a contact surface of the drying material with the air to be increased.

In use, the dehumidifier wheel 2 is rotated, continuously, by drive means 3 so that, at a given moment, a first sector of the dehumidifier wheel 2 is traversed by a flow of process air 4 and a second sector of the dehumidifier wheel 2, adjacent to the first sector, is traversed by a flow of regenerating air 5. In particular, the sector that, at a given moment, is traversed by the flow of process air 4, is known as an absorption sector, whereas the sector that, at a given moment, is traversed by the flow of regenerating air 5 is known as the regeneration sector. As already disclosed previously, the humidity of the flow of process air traversing the drying sector is absorbed by the drying material whereas in the regeneration sector the humidity previously absorbed by the drying material is evaporated from the drying material by the flow of regenerating air 5.

In particular, upstream of the absorption sector with respect to an advancement direction A of the flow of process air 4, a filtering system 6 is present for filtering the process air 4 entering the absorption sector and, interposed between the filtering system 6 and the absorption sector, a first cooling battery 7 is present, known as a condensing battery, having the function of saturating the process air 4 entering the absorption sector, this in order to increase the humidity absorption capacity of the drying material, in particular when the latter is silica gel. Downstream of the absorption sector with respect to the advancement direction A of the flow of process air 4, there is a second cooling battery 8 having the function of cooling to a desired temperature the flow of dried process air 4 exiting the absorption sector. The presence of this second cooling battery 8 is required in particular when the dehumidifier wheel is intended to be used in the food industry, where it is opportune for the process air 4 to have a controlled temperature to prevent undesired organoleptic modifications of the food products that are to be conditioned thermally. Also, downstream of the second cooling battery 8 with respect to the advancement direction A of the flow of process air 4, there is then another filter 9 for filtering the dried and cooled process air 4, before it reaches a user C. Lastly, between the first cooling battery 7 and the dehumidifier wheel 2, there is a fan 10 for sucking the process air 4 from the external environment D and conveying the process air 4 towards the dehumidifier wheel 2 and the user C. It should be noted that the position of the fan 10 is merely by way of non-limiting example.

Also, upstream of the aforesaid regeneration sector with respect to an advancement direction B of the flow of regenerating air 5, there is a filter 11 for filtering the regenerating air 5 entering the regeneration sector and, interposed between the filter 11 and the regeneration sector, there is a heater 12 intended for heating the regenerating air 5 before it traverses the regeneration sector. Also, between the filter 11 and the heater 12, there is a fan 13 for sucking the regenerating air 5 from the external environment D, conveying the regenerating air 5 to the regenerating wheel 2 and subsequently returning the regenerating air 5 to the external environment D. Also, it should be noted that the position of the fan 13 is purely by way of non-limiting example.

In use, the humid process air 4, is removed by the fan 10 from the external environment D, filtered by the filtering system 6, saturated by the first cooling battery 7, passed through the absorption sector where it contacts the drying material releasing the humidity, cooled by the second cooling battery 8, and lastly filtered again by the filter 9 before being sent to the user C. Before being used as a technological adjuvant for the food industry and/or as technical air for the pharmaceutical industry and/or for conditioning environments with a controlled atmosphere, the process air 4 is thus filtered, cooled, dried, cooled and again filtered.

Also, in use, the regenerating air 5 is removed by the fan 13 from the external environment D, filtered by the filter 11, heated by the heater 12, passed through the regeneration sector and discharged into the external environment D. This enables the humidity present in the drying material of the regeneration sector to evaporate rapidly to make the drying material available again, following rotation, continuously, of the dehumidifier wheel 2, to absorb humidity in the adjacent absorption sector. The humid regenerating air 5 exiting the regeneration sector is thus, as anticipated, discharged into the external environment D.

A first form of implementation of the control method according to the invention provides, with reference to the control system 1 shown in Figure 1, sanitizing the dehumidifier wheel 2 before restarting the dehumidifier wheel 2 following a more or less prolonged shutdown.

In this context, "sanitizing" means that set of treatments performed on the dehumidifier wheel 2 having the object of reducing the presence of organic substances, or the presence of a microbial load on the dehumidifier wheel 2.

According to the first form of implementation of the control method according to the invention, sanitizing comprises rotating the dehumidifier wheel 2 by the drive means 3, maintaining the fan 10 switched off, i.e. preventing the process air 4 from flowing into the dehumidifier wheel 2, and switching on the fan 13 and the heater 12, i.e. sending to the dehumidifier wheel 2 the regenerating air 5, filtered by the filter 11, at a set temperature T. The temperature T is comprised between 120°C and 145°C. More precisely, the temperature T is greater than and/or equal to 120°C. In particular, such a driving comprises rotating the dehumidifier wheel 2 for a number of revolutions G sufficient to ensure the complete sanitization of the dehumidifier wheel 2. The number of revolutions G is greater than 3. More precisely, the number of revolutions G is comprised between 3 and 6. In order to detect the aforesaid temperature T, a temperature sensor is provided, which is not shown, whereas in order to detect the number of revolutions G performed by the dehumidifier wheel 2, a proper sensor is provided. During rotation of the dehumidifier wheel 2 for the number of revolutions G, the regenerating air 5 that traverses the dehumidifier wheel 2 is discharged into the external environment D. The aforesaid sanitizing further provides cooling for a set time t, for example comprised between 5 minutes and 30 minutes, the dehumidifier wheel 2 and the circuitry thereof before restarting the dehumidifier wheel 2. In particular, such a cooling provides, after the number of revolutions G has been made by the dehumidifier wheel 2, also shutting down the fan 13 and the heater 12, so as to prevent also the hot regenerating air 5 from flowing into the dehumidifier wheel 2.

The time t necessary for cooling the dehumidifier wheel 2 depends on the dimensions and mass volume of drying material present. In order to speed up the restart of the dehumidifier wheel 2, this sanitizing can comprise shutting down the heater 12 and maintaining the fan 13 switched on so as to send to the dehumidifier wheel 2 a non-heated flow of regenerating air 5.

It should be noted how the method disclosed above enables the risk of contaminating the user C with organic substances to be reduced greatly. In fact, heating the dehumidifier wheel 2 to the temperature T, which is greater than the survival temperature of the organic substances to be eliminated, kills the organic substances before the dehumidifier wheel 2 is restarted, preserving the user C from any contact.

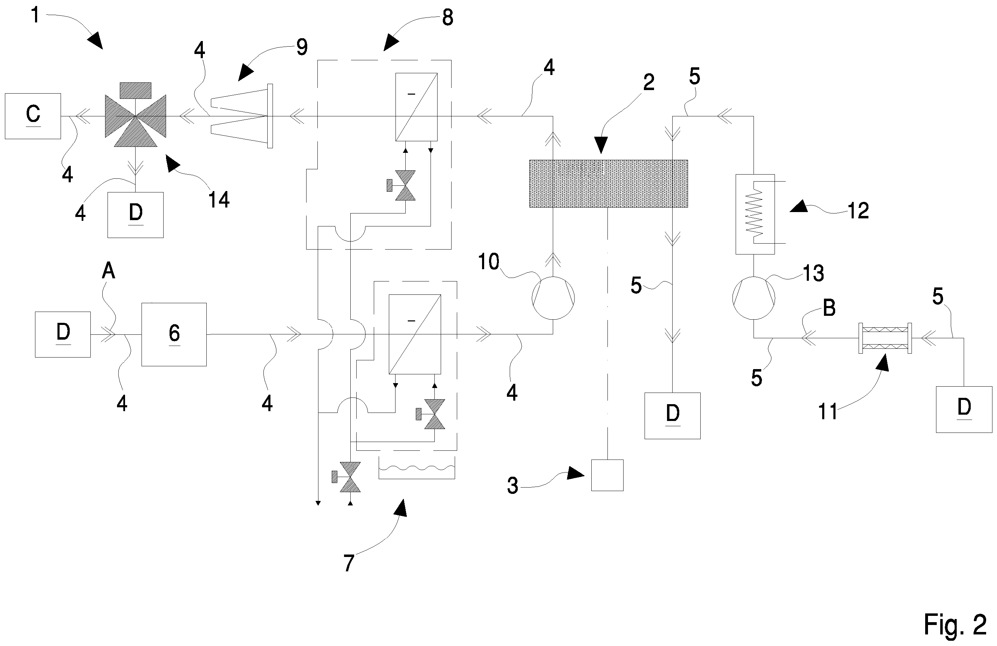

With reference to Figure 2, a control system 1 is shown for controlling a dehumidifier wheel 2 according to an alternative embodiment of the invention.

The control system 1 shown in Figure 2 differs from the system shown in Figure 1 by the fact that it provides, after the filter 9, a valve 14, for example a three-way valve, the function of which is alternatively to make the process air 4 flow to the external environment D, or to the user C.

A second form of implementation of the control system according to the invention provides, with reference to the control system 1 shown in Figure 2, sanitizing the dehumidifier wheel 2 before restarting the dehumidifier wheel 2 following a more or less prolonged shutdown.

According to second form of implementation of the control system according to the invention, sanitizing comprises rotating the dehumidifier wheel 2 by the drive means 3, positioning the valve 14 so as to make the process air 4 flow into the external environment D, switching on the fan 10, i.e. enabling the process air 4, filtered by the filter 9, to flow into the dehumidifier wheel 2 and to exit, via the valve 14 into the external environment D, and switching on the fan 13 and the heater 12, i.e. sending to the dehumidifier wheel 2 the regenerating air 5, filtered by the filter 11, at the temperature T. The temperature T is comprised between 120°C and 145°C. More precisely, the temperature T is greater than 120°C. In particular, such a driving comprises rotating the dehumidifier wheel 2 for a number of revolutions G sufficient to ensure the complete sanitization of the dehumidifier wheel 2. The number of revolutions G is greater than 3. More precisely, the number of revolutions G is comprised between 3 and 6. In order to detect the aforesaid temperature T, a temperature sensor is provided, which is not shown, whereas in order to detect the number of revolutions G performed by the dehumidifier wheel 2, a proper sensor is provided. During rotation of the dehumidifier wheel 2 for the number of revolutions G, both the process air 4 and the regenerating air 5 that traverse the dehumidifier wheel 2 are discharged into the external environment D. Upon termination of the aforesaid "sanification" cycle, there is provided positioning the valve 14 so as to make the process air 4 flow to the user C.

It should be noted how the system disclosed above with reference to the control system 1 of Figure 2 enables the risk of contaminating the user C with organic substances to be reduced greatly. In fact, heating the dehumidifier wheel 2 to the temperature T, which is greater than the survival temperature of the organic substances to be eliminated, kills the organic substances before the dehumidifier wheel 2 is restarted, preserving the user from any contact. Also, it should be noted how the method disclosed with reference to the control system 1 of Figure 2 permits the duration of the sanification cycle to be reduced with respect to the method disclosed with reference to the control system 1 of Figure 1. In fact, during the sanitizing cycle, the continuous flow of the process air 4 enables the dehumidifier wheel 2 and the circuitry thereof to be cooled rapidly. Also, it should be noted how the method disclosed with reference to the control system 1 of Figure 2 enables also the components downstream of the dehumidifier wheel 2 with respect to the advancement direction A of the process air 4, to be sanitized.

In another embodiment of the invention, which is not shown, the control system 1 of Figure 1 or of Figure 2 is provided with a timer. The timer enables a time to be calculated that has elapsed since the last shutdown of the dehumidifier wheel 2. In this embodiment, the method provides automatic sanitizing, according to one of the methods disclosed above, of the dehumidifier wheel 2 after a set time t1 has elapsed since the last shutdown. Also, in this embodiment of the invention, the control system 1 of Figure 1 or of Figure 2 is provided, alternatively, or additionally to the timer, with an environment humidity sensor to measure the humidity of the external environment D. In this embodiment, the method provides sanitizing automatically, according to one of the methods disclosed above, of the dehumidifier wheel 2 if the environment humidity sensor detects a humidity value of the external environment D that is greater than a set value. It should be noted how this embodiment of the invention is particularly effective in cases of particularly long periods of shutdown and/or in the case of particularly humid environments.

Lastly, the control system 1 of Figure 1 or of Figure 2 can be provided with a graphic interface to enable a "sanification" cycle to be started manually.

## Claims

1. Dehumidifier wheel (2) control system (1) configured for sanitizing a dehumidifier wheel (2) before restarting said dehumidifier wheel (2) after a shutdown, wherein said control system (1) comprises a timer configured for calculating a time that has elapsed since the last shutdown of said dehumidifier wheel (2), wherein said sanitizing is performed automatically if a set time (t1) has elapsed since the last shutdown, **characterized in that** said sanitizing comprises rotating said dehumidifier wheel (2) for a set number of revolutions (G), during said rotating said sanitizing prevents a flow of process air (4) from flowing into said dehumidifier wheel (2) and enables a flow of regenerating air (5), which is heated to a set temperature (T), to flow into said dehumidifier wheel (2), or **in that** said sanitizing comprises rotating said dehumidifier wheel (2) for a set number of revolutions (G), during said rotating said sanitizing enables a flow of process air (4) to flow into said dehumidifier wheel (2) and to exit into an external environment (D), and enables a flow of regenerating air (5), which is heated to a set temperature (T), to flow into said dehumidifier wheel (2).

2. Dehumidifier wheel (2) control system (1) according to claim 1, wherein said control system (1) is configured for performing automatically a sanitization of said dehumidifier wheel (2) if a set time (t1) has elapsed since the last shutdown.

3. Dehumidifier wheel (2) control system (1) according to claim 1 or 2, comprising a humidity sensor configured for detecting a humidity value of the environment (D) external to said dehumidifier wheel (2).

4. Dehumidifier wheel (2) control system (1) according to claim 3, wherein said control system (1) is configured for performing automatically a sanitization of said dehumidifier wheel (2) if a humidity value of the external environment (D) is detected that is greater than a set value.

5. Dehumidifier wheel (2) control system (1) configured for sanitizing a dehumidifier wheel (2) before restarting said dehumidifier wheel (2) after a shutdown, wherein said control system (1) comprises a humidity sensor configured for detecting a humidity value of the environment (D) external to said dehumidifier wheel (2), wherein said sanitizing is performed automatically if a humidity value of the external environment (D) is detected that is greater than a set value, **characterized in that** said sanitizing comprises rotating said dehumidifier wheel (2) for a set number of revolutions (G), during said rotating said sanitizing prevents a flow of process air (4) from flowing into said dehumidifier wheel (2) and enables a flow of regenerating air (5), which is heated to a set temperature (T), to flow into said dehumidifier wheel (2), or **in that** said sanitizing comprises rotating said dehumidifier wheel (2) for a set number of revolutions (G), during said rotating said sanitizing enables a flow of process air (4) to flow into said dehumidifier wheel (2) and to exit into an external environment (D), and enables a flow of regenerating air (5), which is heated to a set temperature (T), to flow into said dehumidifier wheel (2).

6. Dehumidifier wheel (2) control system (1) according to claim 5, wherein said control system (1) is configured for performing automatically a sanitization of said dehumidifier wheel (2) if a humidity value of the external environment (D) is detected that is greater than a set value.

7. Dehumidifier wheel (2) control system (1) according to any one of the preceding claims, wherein said sanitizing comprises, after said driving, cooling for a set time (t) said dehumidifier wheel (2).

8. Dehumidifier wheel (2) control system (1) according to claim 7, wherein said cooling comprises preventing said flow of process air (4) and said flow of regenerating air (5) from flowing into said dehumidifier wheel (2).

9. Dehumidifier wheel (2) control system (1) according to claim 7, wherein said cooling comprises preventing said flow of process air (4) from flowing into said dehumidifier wheel (2) and enabling a flow of non-heated regenerating air (5), to flow into said dehumidifier wheel (2).

10. Dehumidifier wheel (2) rotatable in use continuously by drive means (3) so that, at a given moment, a first sector of the dehumidifier wheel (2) is traversed by a flow of process air (4) and a second sector of the dehumidifier wheel (2), adjacent to the first sector, is traversed by a flow of regenerating air (5), said dehumidifier wheel (2) comprising a control system (1) according to any one of the preceding claims.

## Patentansprüche

1. Steuersystem (1) für ein Entfeuchterrad (2), das zum Desinfizieren eines Entfeuchterrads (2) vor dem Neustart des Entfeuchterrads (2) nach einer Abschaltung konfiguriert ist, wobei das Steuersystem (1) einen Zeitgeber umfasst, der zum Berechnen der Zeit konfiguriert ist, die seit der letzten Abschaltung des Entfeuchterrads (2) vergangen ist, wobei die Desinfizierung automatisch durchgeführt wird, wenn seit der letzten Abschaltung eine festgelegte Zeit (t1) vergangen ist, **dadurch gekennzeichnet, dass** das Desinfizieren das Drehen des Entfeuchterrads (2) um eine festgelegte Anzahl von Umdrehungen (G) umfasst, wobei während des Drehens das Desinfizieren einen Strom von Prozessluft (4) zum Einströmen in das Entfeuchterrad (2) verhindert und einen Strom von Regenerationsluft (5), die auf eine festgelegte Temperatur (T) erwärmt wird, zum Einströmen in das Entfeuchterrad (2) ermöglicht, oder **dadurch, dass** das Desinfizieren ein Drehen des Entfeuchterrads (2) um eine festgelegte Anzahl von Umdrehungen (G) umfasst, wobei während des Drehens das Desinfizieren einen Strom von Prozessluft (4) zum Einströmen in das Entfeuchterrad (2) und zum Austreten in eine äußere Umgebung (D) ermöglicht, und einen Strom von Regenerationsluft (5), die auf eine festgelegte Temperatur (T) erwärmt wird, zum Einströmen in das Entfeuchterrad (2) ermöglicht.

2. Steuersystem (1) für ein Entfeuchterrad (2) nach Anspruch 1, wobei das Steuersystem (1) so konfiguriert ist, dass es automatisch eine Desinfektion des Entfeuchterrads (2) durchführt, wenn seit der letzten Abschaltung eine festgelegte Zeit (t1) vergangen ist.

3. Steuersystem (1) für ein Entfeuchterrad (2) nach Anspruch 1 oder 2, umfassend einen Feuchtigkeitssensor, der zum Erfassen eines Feuchtigkeitswerts der Umgebung (D) außerhalb des Entfeuchterrads (2) konfiguriert ist.

4. Steuersystem (1) für ein Entfeuchterrad (2) nach Anspruch 3, wobei das Steuersystem (1) dazu konfiguriert ist, automatisch eine Desinfektion des Entfeuchterrads (2) durchzuführen, wenn ein Feuchtigkeitswert der äußeren Umgebung (D) erfasst wird, der größer als ein festgelegter Wert ist.

5. Steuersystem (1) für ein Entfeuchterrad (2), das zum Desinfizieren eines Entfeuchterrads (2) vor dem Neustart des Entfeuchterrads (2) nach einer Abschaltung konfiguriert ist, wobei das Steuersystem (1) einen Feuchtigkeitssensor umfasst, der zum Erfassen eines Feuchtigkeitswerts der Umgebung (D) außerhalb des Entfeuchterrads (2) konfiguriert ist, wobei die Desinfizierung automatisch durchgeführt wird, wenn ein Feuchtigkeitswert der externen Umgebung (D) erfasst wird, der größer als ein festgelegter Wert ist, **dadurch gekennzeichnet, dass** das Desinfizieren das Drehen des Entfeuchterrads (2) um eine festgelegte Anzahl von Umdrehungen (G) umfasst, wobei während des Drehens das Desinfizieren einen Strom von Prozessluft (4) zum Einströmen in das Entfeuchterrad (2) verhindert und einen Strom von Regenerationsluft (5), die auf eine festgelegte Temperatur (T) erwärmt wird, zum Einströmen in das Entfeuchterrad (2) ermöglicht, oder **dadurch, dass** das Desinfizieren ein Drehen des Entfeuchterrads (2) um eine festgelegte Anzahl von Umdrehungen (G) umfasst, wobei während des Drehens das Desinfizieren einen Strom von Prozessluft (4) zum Einströmen in das Entfeuchterrad (2) und zum Austreten in eine äußere Umgebung (D) ermöglicht, und einen Strom von Regenerationsluft (5), die auf eine festgelegte Temperatur (T) erwärmt wird, zum Einströmen in das Entfeuchterrad (2) ermöglicht.

6. Steuersystem (1) für ein Entfeuchterrad (2) nach Anspruch 5, wobei das Steuersystem (1) dazu konfiguriert ist, automatisch eine Desinfektion des Entfeuchterrads (2) durchzuführen, wenn ein Feuchtigkeitswert der äußeren Umgebung (D) erfasst wird, der größer als ein festgelegter Wert ist.

7. Steuersystem (1) für ein Entfeuchterrad (2) nach einem der vorhergehenden Ansprüche, wobei die Desinfektion nach dem Antreiben ein Kühlen des Entfeuchterrads (2) für eine festgelegte Zeit (t) umfasst.

8. Steuersystem (1) für ein Entfeuchterrad (2) nach Anspruch 7, wobei das Kühlen das Verhindern des Einströmens des Stroms von Prozessluft (4) und des Stroms von Regenerationsluft (5) in das Entfeuchterrad (2) umfasst.

9. Steuersystem (1) für ein Entfeuchterrad (2) nach Anspruch 7, wobei das Kühlen das Verhindern des Einströmens des Stroms von Prozessluft (4) in das Entfeuchterrad (2) und das Ermöglichen des Einströmens eines Stroms von nicht erwärmter Regenerationsluft (5) in das Entfeuchterrad (2) umfasst.

10. Entfeuchterrad (2), das in Verwendung durch Antriebsmittel (3) kontinuierlich drehbar ist, so dass zu einem bestimmten Zeitpunkt ein erster Sektor des Entfeuchterrads (2) durch einen Strom von Prozessluft (4) durchquert wird und ein zweiter Sektor des Entfeuchterrads (2), der an den ersten Sektor angrenzt, durch einen Strom von Regenerationsluft (5) durchquert wird, das Entfeuchterrad (2) umfassend ein Steuersystem (1) nach einem der vorstehenden Ansprüche.

## Revendications

1. Système de commande (1) d'une roue de déshumidificateur (2), configuré pour le nettoyage d'une roue de déshumidificateur (2) avant le redémarrage de ladite roue de déshumidificateur (2) après un arrêt, dans lequel ledit système de commande (1) comprend une minuterie configurée pour calculer un temps écoulé depuis le dernier arrêt de ladite roue de déshumidificateur (2), dans lequel ledit nettoyage est effectué automatiquement si un temps défini (t1) s'est écoulé depuis le dernier arrêt, **caractérisé en ce que** ledit nettoyage comprend la rotation de ladite roue de déshumidificateur (2) pendant un nombre défini de tours (G), pendant ladite rotation, ledit nettoyage empêche un flux d'air de traitement (4) de s'écouler dans ladite roue de déshumidificateur (2) et permet à un flux d'air de régénération (5), lequel est chauffé à une température définie (T), de s'écouler dans ladite roue de déshumidificateur (2), **ou en ce que** ledit nettoyage comprend la rotation de ladite roue de déshumidificateur (2) pendant un nombre défini de tours (G), pendant ladite rotation, ledit nettoyage permet à un flux d'air de traitement (4) de s'écouler dans ladite roue de déshumidificateur (2) et de sortir dans un environnement (D) extérieur, et permet à un flux d'air de régénération (5), lequel est chauffé à une température définie (T), de s'écouler dans ladite roue de déshumidificateur (2).

2. Système de commande (1) d'une roue de déshumidificateur (2) selon la revendication 1, dans lequel ledit système de commande (1) est configuré pour effectuer automatiquement un nettoyage de ladite roue de déshumidificateur (2) si un temps défini (t1) s'est écoulé depuis le dernier arrêt.

3. Système de commande (1) d'une roue de déshumidificateur (2) selon la revendication 1 ou 2, comprenant un capteur d'humidité configuré pour détecter une valeur d'humidité de l'environnement (D) extérieur à ladite roue de déshumidificateur (2).

4. Système de commande (1) d'une roue de déshumidificateur (2) selon la revendication 3, dans lequel ledit système de commande (1) est configuré pour effectuer automatiquement un nettoyage de ladite roue de déshumidificateur (2) si une valeur d'humidité de l'environnement (D) extérieur, supérieure à une valeur définie, est détectée.

5. Système de commande (1) d'une roue de déshumidificateur (2), configuré pour le nettoyage d'une roue de déshumidificateur (2) avant le redémarrage de ladite roue de déshumidificateur (2) après un arrêt, dans lequel ledit système de commande (1) comprend un capteur d'humidité configuré pour détecter une valeur d'humidité de l'environnement (D) extérieur à ladite roue de déshumidificateur (2), dans lequel ledit nettoyage est effectué automatiquement si une valeur d'humidité de l'environnement (D) extérieur, supérieure à une valeur définie, est détectée, **caractérisé en ce que** ledit nettoyage comprend la rotation de ladite roue de déshumidificateur (2) pendant un nombre défini de tours (G), pendant ladite rotation, ledit nettoyage empêche un flux d'air de traitement (4) de s'écouler dans ladite roue de déshumidificateur (2) et permet à un flux d'air de régénération (5), lequel est chauffé à une température définie (T), de s'écouler dans ladite roue de déshumidificateur (2), **ou en ce que** ledit nettoyage comprend la rotation de ladite roue de déshumidificateur (2) pendant un nombre défini de tours (G), pendant ladite rotation, ledit nettoyage permet à un flux d'air de traitement (4) de s'écouler dans ladite roue de déshumidificateur (2) et de sortir dans un environnement (D) extérieur, et permet à un flux d'air de régénération (5), lequel est chauffé à une température définie (T), de s'écouler dans ladite roue de déshumidificateur (2).

6. Système de commande (1) d'une roue de déshumidificateur (2) selon la revendication 5, dans lequel ledit système de commande (1) est configuré pour effectuer automatiquement un nettoyage de ladite roue de déshumidificateur (2) si une valeur d'humidité de l'environnement (D) extérieur, supérieure à une valeur définie, est détectée.

7. Système de commande (1) d'une roue de déshumidificateur (2) selon l'une quelconque des revendications précédentes, dans lequel ledit nettoyage comprend, après ledit entraînement, un refroidissement pendant un temps défini (t) de ladite roue de déshumidificateur (2).

8. Système de commande (1) d'une roue de déshumidificateur (2) selon la revendication 7, dans lequel ledit refroidissement comprend l'empêchement dudit flux d'air de traitement (4) et ledit flux d'air de régénération (5) de s'écouler dans ladite roue de déshumidificateur (2).

9. Système de commande (1) d'une roue de déshumidificateur (2) selon la revendication 7, dans lequel ledit refroidissement comprend l'empêchement dudit flux d'air de traitement (4) de s'écouler dans ladite roue de déshumidificateur (2) et le fait de permettre à un flux d'air de régénération non chauffé (5) de s'écouler dans ladite roue de déshumidificateur (2).

10. Roue de déshumidificateur (2) rotative en utilisation continue par un moyen d'entraînement (3) de sorte que, à un moment donné, un premier secteur de la roue de déshumidificateur (2) est traversé par un flux d'air de traitement (4) et un second secteur de la roue de déshumidificateur (2), adjacent au premier secteur, est traversé par un flux d'air de régénération (5), ladite roue de déshumidificateur (2) comprenant un système de commande (1) selon l'une quelconque des revendications précédentes.
